Europäisches Patentamt

European Patent Office

Office européen des brevets

Publication number: **0 286 270**
A2

# EUROPEAN PATENT APPLICATION

Application number: 88302538.9

Int. Cl.⁴: **B29C 63/18**

Date of filing: 23.03.88

Priority: 09.04.87 GB 8708556

Date of publication of application:
12.10.88 Bulletin 88/41

Designated Contracting States:
AT BE CH DE ES FR GB IT LI NL SE

Applicant: N.V. RAYCHEM S.A.
Diestsesteenweg 692
B-3200 Kessel-lo(BE)

Inventor: Huysmans, Jan
Val du Prince 8
B-1950 Kraainem(BE)
Inventor: Vandeput, Michel
Quarrelaan 8
B-3200 Kessel-Lo(BE)

Representative: Auckland, Jacqueline et al
I.P.L.D. Raychem Limited Swan House 37/39
High Holborn
London WC1V 6AA(GB)

## Method and assembly for protecting a substrate.

A method and apparatus are described for supplying a body of sealant (10) (preferably a gel), having a cone penetration of 100-350 ($10^{-1}$ mm) and an ultimate elongation of at least 50% to a substrate. The sealant (10) is provided as a strip that is wrapped around a smaller diameter portion of an elongate applicator (2). The applicator (2) has a tapered region (6) extending from the region (4) where the sealant (10) is wrapped. The sealant (10) is rolled along the tapered region (6) onto the substrate (14). Thus the sealant (10) is deformed and its sealing capability increased.

EP 0 286 270 A2

*Fig.3.*

# METHOD AND ASSEMBLY FOR PROTECTING A SUBSTRATE

This invention relates to a method and an assembly for providing an annular protective coating on a substrate using a wrapped strip.

Articles (and/or compositions) are known that may be used as a sealant and void-filler to protect a substrate in a corrosive, moist and adverse environment. These articles and/or compositions include simple tape wrappings as well as heat-recoverable materials (see Cook et al U.S. Patent No. 3,086,242). Other articles and/or compositions that are advantageously employed under appropriate conditions are oils, greases and adhesives.

A further important candidate for a sealant and void filler composition is an encapsulant e.g. a gel. Heretofore, gels have typically been prepared as a two-part liquid composition with ingredients that react slowly together. Before the ingredients have gelled the liquid composition is poured into a container that holds a substrate to be sealed; the liquid composition subsequently cures in situ to form a gel (see U.S. Patent No. 4,375,521 and U.S. Patent No. 4,102,716). This procedure is not optimal, however, since it involves preparation of the liquid composition at the site, and delay while the composition gels and may also generate toxic fumes. Additionally, it is not always practical to deliver the gel to the substrate by way of the container. Furthermore, when reentry to the sealed substrate is required, the gelled composition cannot easily be removed.

More specifically British Patent Application Publication No. 2133026 (MP0838COM GB) describes an encapsulating gel material supported by and distributed in a flexible matrix in the form of a strip or tape. This strip can be wrapped around a substrate for example in overlapped spiral, that is cigarette-type wraps to form a thin and protective coating over the substrate.

Other patent application publications which describe the use of a gel encapsulating materials in the form of tapes include EP 0194872 (MP1043), EP 204427 (MP1054), EP 203773 (MP1056) and EP 200557 (MP1057).

Amongst their other properties the encapsulating materials described in the above referenced patent specifications have a ultimate elongation of at least 50%, and in some cases at least 100%, 150% or even 200%. This means that when stretched below this limit the materials tend to recover towards their original pre-shaped configuration. This property is typically used to advantage to improve the protective seal provided by a wrapped tape of the references. This can be done by stretching the tape during its installation, and then securing the free end, for example with a tie-wrap.

The tension thereby introduced enhances the protective seal provided by the tape.

We have discovered a new and convenient method and assembly for supplying and also for applying a sealant material, for example an encapsulant material such as those described in the published references mentioned above, to provide a protective coating. The method and apparatus can advantageously be used easily and uniformly to stretch the sealant material during installation thereof. Also the invention makes it possible to install the sealant material in positions that are not readily accessible.

The present invention provides a method of providing an annular protective coating on a substrate, comprising:

(1) providing an elongate applicator which comprises a first region around which a sealant strip is wrapped and a tapered region extending from the first region such that the end of the tapered region furthest from the first region has a larger periphery than the end of the tapered region nearest the first region, the sealant strip comprising material having a cone penetration value of 100-350 $(10^{-1}$ mm) and an ultimate elongation of at least 50%, and

(2) rolling the wrapped strip from the said first region over the tapered region of the applicator, and onto the substrate to be protected.

The present invention also provides an assembly for providing an annular protective coating on a substrate comprising:

(a) an elongate applicator which comprises a first region and a tapered region extending from the first region such that the end of the tapered region furthest from the first region has a larger periphery than the end of the tapered region nearest the first region, and

(b) a strip which can be wrapped around the first region of the elongate applicator and which comprises sealant material having penetration value of 100-350 (10-1 mm) and an ultimate elongation of at least 50%, wherein the wrapped strip can be rolled from the first region over the tapered region of the applicator onto the substrate to protect it.

The strips described in the published references mentioned above are preferred for use in the present invention. The disclosures of those references are incorporated herein by reference. Thus, for example, the sealant may be provided as an impregnant comprising a plurality of interconnected segments which lie within the interstices of a flexible matrix, as described in GB 2133026 (MP0838COM). As another option the sealant my be bonded to a porous polymeric support with a bond having a strength greater than at least one of the cohesive strength of the sealant and the cohesive strength of the support itself, as described in EP 0194872 (MP1043).

The sealant according to the invention has an ultimate elongation of at least 50%, for some applications it has an ultimate elongation of at least 100%, or at least 150%, or at least 200%.

According to both the method and the assembly according to the invention, the applicator and sealant strip may be supplied as separate items, or with the strip prewrapped on the applicator. If the items are supplied separately then in the field the strip is simply wrapped around the applicator and cut to the desired length. Alternatively the strip may be precut. Preinstallation of the strips on the applicator is, in the alternative, a convenient means of providing the sealant. The preinstallation can conveniently be done by an automated wrapping process.

In cases where the sealant material has a tacky surface, as is common for the type of material described in the published references mentioned above, a release layer is preferably provided on the exposed sealant surface. Where the sealant strip is provided separately it preferably extends along the entire length of the strip. Where the strip is preinstalled, it preferably extends only around the outer periphery of the wrapped strip.

Once the strip has been rolled from the applicator onto the substrate to be protected, the applicator is preferably removed. The applicator may then be discarded, or if desired, re-used.

The method according to the invention involves rolling the wrapped strip along the application, from the first region, where it is wrapped, over a tapering region of increasing outer periphery, preferably to a second region of larger outer periphery. This rolling step stretches the sealant material. The sealant is then rolled onto the substrate. The part of the substrate covered by the sealant preferably has an annular periphery that is larger than the annular periphery of the smaller first region of the applicator. This means that at least some of the stretch introduced in the step of rolling the sealant from the first to second regions is maintained. This advantageously enhances the sealing provided by the sealant, since it retains a residual stress tending to urge it towards the substrate to be protected. Preferably the substrate has an annular periphery substantially similar in size to that of the maximum peripheral size of the applicator, so that substantially all the stretching tensions introduced during rolling of the sealant is maintained. Thus the preferred outcome is that the sealant material is more stretched after it has been rolled onto the substrate to be protected than before the rolling step, i.e. than when it was in its wrapped position around the first region of the applicator. In this said wrapped position about the first region of the applicator the strip may or may not be stretched. In one preferred embodiment it is unstretched in this pre-rolling position, i.e. the strip is initially wound onto the first region without stretching. In another preferred embodiment, where the strip is multiwrapped, it is slightly stretched in the first wrap and unstretched in second and subsequent wraps, in the prerolling position.

A convenient shape for the applicator, which can be used to effect the desired stretching, is funnel shaped. Preferably all the regions of the applicator have curved peripheries, preferably substantially circular peripheries, for ease of rolling.

The strip is preferably wrapped in two or more complete wraps around the applicator, preferably in overlapping spiral wraps, that is an overlapping cigarette type wrap. The number of wraps selected depends on the size or thickness of protective coating required. In this respect it should be taken into consideration that the rolled tape will generally have a greater thickness after rolling than before rolling.

In a preferred embodiment the applicator is hollow at least at the end furthest from the first region, and a preferred method according to the invention comprises positioning the said furthest region over part of the said substrate to allow the strip to be rolled onto the part of the substrate to be connected. This makes it easy to position the sealant precisely, since the far end of the applicator can be positioned directly at the point of the substrate to be protected. Thus the sealant does not have to be further moved on the substrate itself. It also allows installation onto parts which would otherwise be difficult to access, for example onto a necked region of an elongate object.

The high ultimate elongation of the sealant and the fact that it has been rolled during installation means that the strip may have a tendency to unroll. For this reason, and also for applications where the sealant material is to be subjected to an external force causing it to unroll, or roll away, e.g. where the sealant is applied to a substrate arranged at an angle to horizontal and the sealant is thus subject to gravity pull, preferred embodiments according to the invention use a stop or clamp positioned adjacent or around the rolled strip on the substrate substantially to prevent the strip unrolling, or rolling away. The clamp or clip may function along, or in conjunction with part of the substrate to prevent the strip unrolling. In some applications the shape of the substrate itself may prevent unrolling.

The applicator may be integrally formed, or made of two or more disconnectable parts. For example, the tapered portion (and if present second portion) may be disconnectable from the first portion.

Embodiments of the invention will now be described, by way of example, with reference to the accompanying drawings, wherein

Figure 1 is a perspective view of an assembly according to the invention.

Figure 2 is a perspective view of a second assembly according to the invention.

Figure 3 is a side view of the assembly of Figure 1 positioned to install the sealant ring thereof onto a substrate.

Figure 4 is a side view of the substrate and installed sealant of Figure 3.

Figures 5 and 6 are side views of the substrate and sealant of Figure 4 including a stop of clamp to prevent unrolling of the sealant.

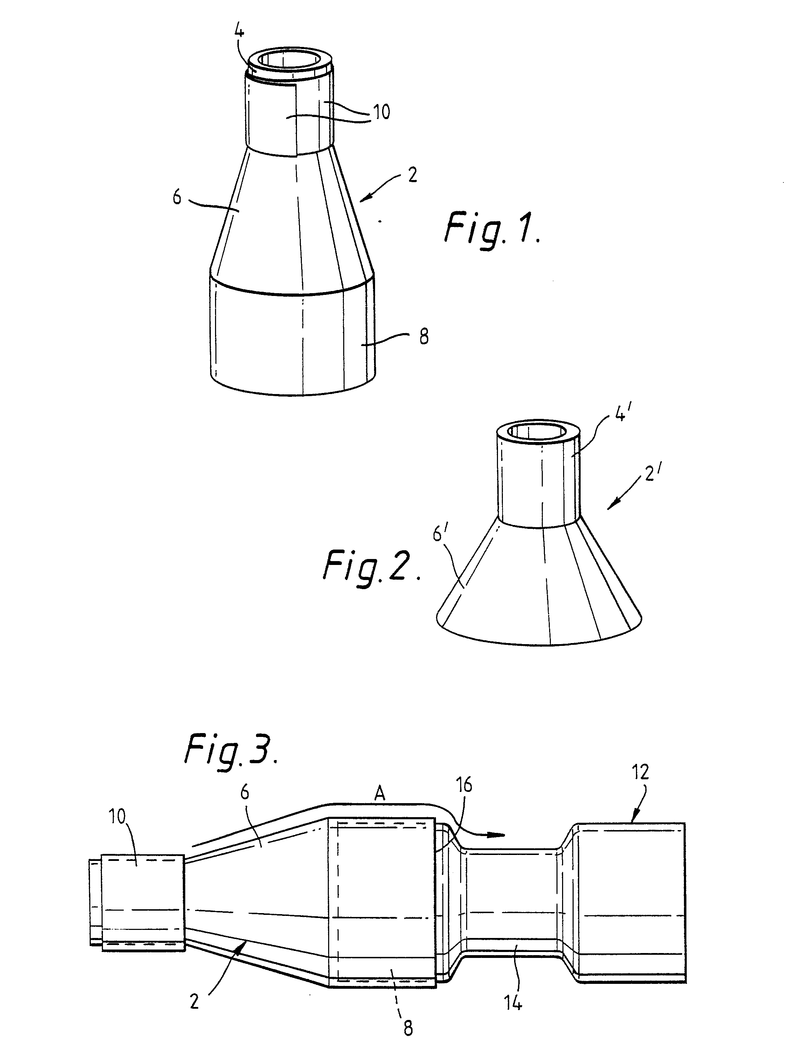

Referring to the drawings Figure 1 shows an assembly comprising an applicator 2 having a first region 4, tapered region 6 and second region 8. Tapered region 6 connects first and second regions 4 and 8. Second region 8 has a larger outer periphery than first region 4. A gel strip 10 according to EP 204427 (MP1054) is spirally or cigarette wrapped twice around first region 4. The gel is wrapped with slight tension in the first wrap and no tension in the second wrap. Applicator 2 is hollow. It may be integrally formed or made of disconnectable parts.

Figure 2 shows an alternative applicator 2'. The gel strip 10 is not shown. Applicator 2' has a first region 4' and tapered region 6'. It has no second region. Regions 4' and 6' may be integrally formed, or disconnectable and reconnectable.

Figure 3 shows the applicator of Figure 1 positioned over a necked substrate 12. The necked region 14 of the substrate 12 is to be sealed. The second region 8 is positioned over one end of the substrate 12 so that the free end thereof 16 is directly adjacent the necked region 14.

To install the strip 10 over the necked region it is rolled up over the tapered and second regions 6 and 8 onto the substrate, as indicated by the direction arrow 8. The rolling operation stretches the gel strip 10 so it is put under tension. The necked region 14 of the substrate 12 has a larger outer periphery than the first region 4 of the applicator 2. Thus at least some of the tension introduced during the rolling operation is retained when the gel is in position around the necked portion 14 of the substrate.

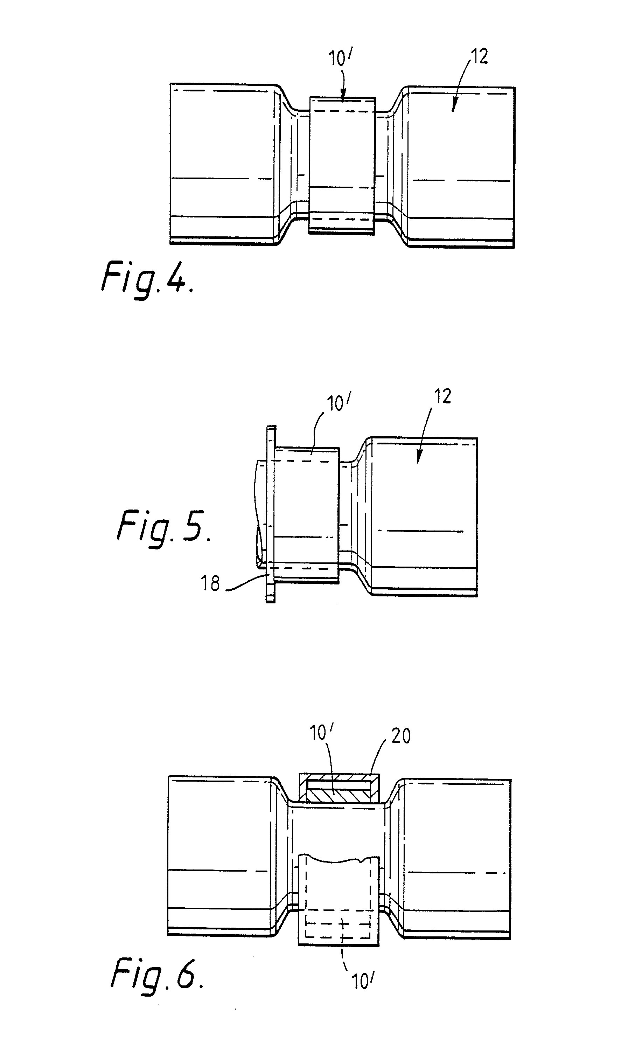

The positioned rolled gel strip 10' is shown in Figure 4. The rolled gel strip 10' has a greater thickness than in its unrolled position.

Figure 5 shows a stop 18 used in conjunction with part of substrate 12 to stop the rolled gel strip

10' unrolling.

Figure 6 similarly shows a clamp 20 which alone stops the rolled gel strip 10' unrolling.

## Claims

1. A method of providing an annular protective coating on a substrate, comprising:

(1) providing an elongate applicator which comprises a first region around which a sealant strip is wrapped and a tapered region extending from the first region such that the end of the tapered region furthest from the first region has a larger periphery than the end of the tapered region nearest the first region, the sealant strip comprising material having a cone penetration value of 100-350 $(10^{-1}$ mm) and an ultimate elongation of at least 50%, and

(2) rolling the wrapped strip from the said first region over the tapered region of the applicator, and onto the substrate to be protected.

2. A method according to claim 1, which additionally comprises the step of wrapping the said strip around the smaller first region of the applicator.

3. A method according to claim 1, wherein the annular periphery of the part of the substrate to be protected is larger than the annular periphery of the first region of the applicator, such that the strip is more stretched when it has been rolled onto the substrate to be protected than before the rolling step.

4. A method according to claim 1, wherein the strip has a greater thickness after rolling than before rolling.

5. A method according to claim 1, wherein the applicator is hollow at least at the end furthest from the said first region, and the method comprises positioning the said furthest end over part of the said substrate to allow the strip to be rolled onto the part of the substrate to be connected.

6. A method according to claim 1, comprising removing the applicator after the strip has been rolled onto the substrate to be protected.

7. An assembly for providing an annular protective coating on a substrate comprising:

(a) an elongate applicator which comprises a first region, and a tapered region extending from the first region such that the end of the tapered region furthest from the first region has a larger periphery than the end of the tapered region nearest the first region, and

(b) a strip which can be wrapped around the first region of the elongate applicator and which comprises sealant material having a cone penetration value of 100-350 (10-1 mm) and an ultimate elongation of at least 50%,

wherein the strip can be rolled from the first region over the tapered region of the applicator onto the substrate to protect it.

8. An assembly according to claim 9, wherein the strip is wrapped around the said first region of the applicator.

9. A method or assembly according to any preceding claim, wherein the strip is wrapped, preferably spirally, two or more times around the first region of the applicator.

10. A method or assembly according to any preceding claim, wherein the tapered region connects the said first region to a second region having a larger annular periphery than the said first region.

4

10

6

2

**Fig. 1.**

8

4'

2'

6'

**Fig.2.**

**Fig.3.**

10

6

A

16

12

2

8

14

Fig.4.

Fig.5.

Fig.6.